# EUROPÄISCHE PATENTANMELDUNG

(11) **EP 1 562 275 A1**
(43) Veröffentlichungstag der Anmeldung: **10.08.2005**
(21) Anmeldenummer: 04024442.8
(22) Anmeldetag: 14.10.2004
(51) Int. Cl.: H02K 7/116, H02K 1/27

(54) **Motor mit Planetengetriebe**

(30) Priorität: 04.02.2004 DE 102004005614
(71) Anmelder: Gross, Beatrix, Dipl.-Ing., 70469 Stuttgart (DE)
(72) Erfinder: Gross, Beatrix, Dipl.-Ing., 70469 Stuttgart (DE)
(74) Vertreter: Kohler Schmid Möbus

(57) **Zusammenfassung**

Bei einer Motor-Getriebeanordnung (1) sind ein bürstenloser Permanentmagnet-Axialfeld-Motor und ein Planetengetriebe in einem gemeinsamen Gehäuse (15) angeordnet, wobei ein Hohlrad (7) des Planetengetriebes einen Teil des Gehäuses (15) bildet, eine Motorwelle (3) und ein Abtriebselement (16) koaxial angeordnet sind und ein Permanentmagnetträger (21) an die Form des Hohlrads (7) derart angepasst ist, dass der Motor und das Getriebe sich teilweise überlappen. Dadurch wird eine axial kurze, kompakte Motor-Getriebeanordnung (1) realisiert.

## Beschreibung

### Stand der Technik

Die Erfindung betrifft eine Motor-Getriebeanordnung, umfassend ein mit einer Motorwelle eines Motors in Verbindung stehendes Getriebe, wobei der Motor eine Vielzahl von mit Abstand von der Motorwelle in gleichmäßigen Winkelabständen angeordnete Elektromagnet-Bauelemente und in gleichmäßigen Winkelabständen an mindestens einem mit der Motorwelle drehfest verbundenen Permanentmagnethalter angeordnete Permanentmagnete umfasst.

Aus der EP 1 153 469 B1 ist eine elektrische Maschine mit einem in einem Gehäuse drehbar gelagerten Rotor und mit aus dem Gehäuse herausgeführter Rotorwelle bekannt geworden. Die elektrische Maschine umfasst eine Vielzahl von mit Abstand von der Rotor-Drehachse in gleichmäßigen Winkelabständen ortsfest im Gehäuse angeordneten Elektromagnet-Bauelementen mit jeweils einem eine Spulenwicklung aus einem oder mehreren Leitern tragenden Spulenkern. Weiterhin sind in gleichmäßigen Winkelabständen angeordnete, mit jeweils einer Polfläche zu den Stirnflächen der Spulenkerne gegenüberstehend ausgerichtete, drehfest im oder am Rotor gehalterte Permanentmagneten mit in Umfangsrichtung aufeinanderfolgend jeweils entgegengesetzter Polarität vorgesehen, wobei die Spulenkerne der Elektromagnet-Bauelemente derart parallel zur Drehachse der Rotorwelle im Gehäuseinneren angeordnet sind, dass ihre gegenüberliegenden Stirnflächen jeweils in zwei voneinander beabstandeten, rechtwinklig zur Rotorwellen-Drehachse verlaufenden Ebenen liegen und die Enden der die Spulenwicklung bildenden elektrischen Leiter der einzelnen Elektromagnet-Bauelemente über eine elektrische oder elektronische Steuereinrichtung zu wenigstens zwei elektrischen Anschlusspaaren zusammengeschaltet sind und der Rotor wenigstens zwei sich radial bis vor die Stirnflächen der Spulenkerne erstreckende äußere Läuferscheiben aufweist, in denen die Permanentmagneten mit ihren Polflächen zu den jeweils zugeordneten Spulenkern-Stirnflächen ausgerichtet gehalten sind.

Der Magnetfluss verläuft ausschließlich zwischen den Rotorscheiben und dem Spulenkranz, in dem die Elektromagnet-Bauelemente angeordnet sind. Das Motorgehäuse muss daher nur nach mechanischen Gesichtspunkten ausgelegt werden und die Materialwahl steht frei. Durch das vorgegebene Permanentmagnetfeld beschränkt sich die Motorsteuerung auf den Spulenkranz. Die eingestellte Frequenz ist verantwortlich für die Motordrehzahl, die zugeführte elektrische Leistung für das Drehmoment. Als elektrische Ansteuerung kann ein zweiphasiges Wechselstromsystem vorgesehen sein. Die Maschine kann jedoch auch für einen drei- und mehrphasigen Betrieb ausgelegt werden. Eine derartige Maschine liefert hohe Drehmomente schon bei geringer Leistungszufuhr. Entsprechend gut ist das Anfahrverhalten der Maschine.

Ein Beispiel für die Anwendung einer derartigen Maschine sind elektrische Fensterheber für Kraftfahrzeuge. Auf Grund des guten Drehmomentverhaltens einer solchen Maschine kann auf ein übliches Schneckengetriebe verzichtet werden. Es ist bekannt, eine derartige Maschine mit einem mehrstufigen Stirnradgetriebe zu kombinieren. Dabei ist das Stirnradgetriebe außerhalb des Motors angeordnet. Die Achsen des mehrstufigen Stirnradgetriebes sind parallel zueinander angeordnet, insbesondere ist die Abtriebswelle neben der Motorwelle angeordnet, so dass im Gesamtaufbau eine relativ große Motor-Getriebeanordnung entsteht. Daher wird ein großer Einbauraum benötigt und ist der Einsatz, beispielsweise bei Fensterhebern in Kraftfahrzeugen (Kfz), limitiert.

### Aufgabe der Erfindung

Aufgabe der vorliegenden Erfindung ist es, eine Motor-Getriebeanordnung der eingangs genannten Art dahingehend weiterzubilden, dass ein geringer Einbauraum benötigt wird und ein gutes Übersetzungsverhältnis erreicht wird.

### Gegenstand der Erfindung

Erfindungsgemäß wird diese Aufgabe dadurch gelöst, dass bei einer Motor-Getriebeanordnung der eingangs genannten Art das Getriebe als Planetengetriebe ausgebildet ist. Durch diese Maßnahme kann ein Modularantrieb geschaffen werden, der bei unterschiedlichsten Einsatzbereichen Verwendung finden kann. Insbesondere kann eine solche Motor-Getriebeanordnung bei Fensterhebern im Kfz-Bereich und zur Sitzverstellung im Kfz-Bereich zum Einsatz kommen. Die erfindungsgemäße Motor-Getriebeanordnung kommt ohne Schneckengetriebe und ohne Bremse aus. Auf Grund des Planetengetriebes kann die Getriebestufe in den Antrieb des Motors integriert werden, wodurch die Größe der Motor-Getriebeanordnung reduziert wird und ein geringerer Einbauraum, beispielsweise in einem Kfz, benötigt wird.

Besonders'bevorzugt ist es, wenn der Motor ein Gehäuse aufweist und das Planetengetriebe in demselben Gehäuse angeordnet ist. Dies bedeutet, dass der Motor und das Getriebe in einem gemeinsamen Gehäuse angeordnet sind. Dadurch wird nicht nur Material gespart, sondern kann auch die Motor-Getriebeanordnung insgesamt kleiner ausgeführt werden.

Bei einer bevorzugten Ausführungsform kann vorgesehen sein, dass eine erste Sonne, insbesondere ein erstes Sonnenrad, mit der Motorwelle drehfest verbunden ist und mit einem sich in einem Hohlrad abrollenden ersten Planetenrad zusammenwirkt, wobei das Hohlrad einen Teil des Gehäuses darstellt. Eine weitere Materialersparnis kann erreicht werden, wenn die erste Sonne auf oder an der Motorwelle ausgebildet ist. Es wird daher kein separates Teil für das erste Sonnenrad benötigt. Die erste Sonne kann einstückig, insbesondere materialschlüssig, mit der Motorwelle ausgebildet sein. Der Zusammenbau der Motor-Getriebeanordnung wird dadurch vereinfacht. Besonders vorteilhaft auf die Größe der Motor-Getriebeanordnung wirkt sich die Ausbildung des Hohlrads als Teil des Gehäuses aus.

Grundsätzlich ist es denkbar, die erste Sonne und das erste Planetenrad als Reibräder auszubilden. In einem solchen Fall sollte das Hohlrad eine Reibfläche aufweisen, an der sich das erste Planetenrad abrollen kann. Vorzugsweise sind die erste Sonne und das Planetenrad jedoch als Zahnräder ausgebildet, so dass vorteilhafterweise das Hohlrad einen ersten innen liegenden Zahnkranz aufweist, mit dem das erste Planetenrad kämmen kann.

Bei einer vorteilhaften Ausgestaltung der Erfindung ist ein erster Planetenträger vorgesehen, der eine Lagerung für das erste Planetenrad aufweist und auf die Motorwelle oder einen Wellenfortsatz der ersten Sonne aufsteckbar ist. Wenn das Planetengetriebe als einstufiges Getriebe ausgebildet ist, kann an der einen Seite des Planetenträgers ein Abtriebselement vorgesehen sein, durch das beispielsweise eine Abtriebswelle angetrieben werden kann. Eine derartige Ausgestaltung der Erfindung unterstützt die kompakte Ausführung der Motor-Getriebeanordnung. Wenn die erste Sonne in oder an der Motorwelle ausgebildet ist, ist der erste Planetenträger vorzugsweise auf die Motorwelle gesteckt. Wenn die Sonne bzw. das Sonnenrad als separates, auf die Motorwelle aufsteckbares Teil ausgebildet ist, weist das Sonnenrad vorzugsweise einen koaxial zur Motorwelle angeordneten Wellenfortsatz auf, auf den der erste Planetenträger gesteckt ist. Bei einem einstufigen Getriebe ist die Motorwelle vorzugsweise in dem ersten Planetenträger gelagert. Bei einem zweistufigen Getriebe durchgreift die Motorwelle vorzugsweise den ersten Planetenträger und ist mit einem Ende in einem zweiten Planetenträger gelagert.

Besonders bevorzugt ist es, wenn das Planetengetriebe zweistufig ausgebildet ist. Durch diese Maßnahme lässt sich ein besonders günstiges Übersetzungsverhältnis von beispielsweise 20:1 realisieren. Ein Motor mit einem derartigen zweistufigen Planetengetriebe ist besonders zum Antrieb von Fensterhebern eines Kfz geeignet.

Bei einer bevorzugten Ausführungsform der Erfindung kann vorgesehen sein, dass der erste Planetenträger eine zweite Sonne aufweist, die über ein zweites an einem zweiten Planetenträger gelagertes Planetenrad den zweiten Planetenträger antreibt. Durch die gemeinsame Ausbildung unterschiedlicher Funktionselemente in einem Bauteil - hier der zweiten Sonne an dem ersten Planetenträger - wird eine besonders kompakte Ausführungsform der Motor-Getriebeanordnung begünstigt.

Bei einer Weiterbildung kann vorgesehen sein, dass das zweite Planetenrad sich in einem Hohlrad abrollt. Wenn das zweite Planetenrad als Zahnrad ausgebildet ist, rollt es sich vorzugsweise in einem Zahnkranz des Hohlrads ab. Vorzugsweise rollen das erste und zweite Planetenrad sich in demselben Hohlrad ab. Durch diese Maßnahme wird die Anzahl der Bauteile reduziert. Dabei kann vorgesehen sein, dass die Zahnkränze für das erste und zweite Planetenrad unterschiedliche Durchmesser aufweisen.

Vorzugsweise ist das Hohlrad stufenförmig aufgebaut. Durch diese Maßnahme ist es möglich, ein zweistufiges Planetengetriebe innerhalb des stufenförmigen Hohlrads anzuordnen, wobei die Zahnkränze der Getriebestufen in unterschiedlichen Stufen des Hohlrads angeordnet sein können. Dadurch wird eine axial kurze Ausführung der Motor-Getriebeanordnung ermöglicht.

Besonders vorteilhaft ist es, wenn ein Abtriebselement koaxial zu der Motorwelle angeordnet ist. Dadurch kann die Motor-Getriebeanordnung besonders schmal ausgebildet werden. Ein lateraler Versatz der Achsen, wie bei einem mehrstufigen Stirnradgetriebe, ist nicht notwendig. Das Abtriebselement ist vorzugsweise auf der dem Motor abgewandten Seite eines Planetenträgers angeordnet. Bei einer einstufigen Ausführungsform des Planetengetriebes ist das Abtriebselement auf dem Planetenträger der ersten Getriebestufe und bei einem zweistufigen Aufbau des Planetengetriebes auf der dem Motor abgewandten Seite des Planetenträgers der zweiten Getriebestufe angeordnet.

Das Abtriebselement kann grundsätzlich beliebig ausgebildet werden. Insbesondere kann es auf den Einsatzzweck der Motor-Getriebeanordnung angepasst sein. Bevorzugt sind Ausführungsformen des Abtriebselements als Zahnrad oder als Seilrolle. Insbesondere für den Einsatz der Motor-Getriebeanordnung bei Fensterhebern von Kraftfahrzeugen ist eine Ausführungsform als Seilrolle vorteilhaft.

Bei einer vorteilhaften Ausführungsform ist eine, insbesondere stirnseitige, Gehäuseabdeckung vorgesehen, die eine Verzahnung aufweist, die in eine korrespondierende Verzahnung des Hohlrads eingreift. Beispielsweise kann die Gehäuseabdeckung in einen Zahnkranz des Hohlrads, in dem sich einer der Planeten abrollt, insbesondere den äußeren Zahnkranz der zweiten Getriebestufe, eingreifen. Die Gehäuseabdeckung kann dadurch drehfest angeordnet werden. Es kann jedoch auch ein separater Zahnkranz vorgesehen sein, der sich an einen Zahnkranz, in dem sich ein Planet abrollt, anschließt und in den die Verzahnung eingreift.

Vorzugsweise ist die Motorwelle einenends in einem Gehäuseteil und anderenends in einem Planetenträger gelagert. Dies bedeutet, dass die Motorwelle nicht aus dem Gehäuse hervorstehen muss, wie dies beispielsweise bei dem Motor des Standes der Technik vorgesehen ist. Insbesondere kann das eine Ende der Motorwelle innerhalb des Abtriebselements angeordnet sein. Dadurch ist es möglich, dass sich die Motorwelle mit einer anderen Geschwindigkeit dreht als das Abtriebselement. Es muss nicht ein zusätzliches Lager im Gehäuse für die Motorwelle vorgesehen werden.

Bei einer besonders bevorzugten Ausführungsform ist vorgesehen, dass die Form des mindestens einen Permanentmagnetträgers an das Hohlrad angepasst ist. Diese Maßnahme ermöglicht es, die Getriebestufe sehr nahe am Motor anzuordnen. Insbesondere können Teile des Hohlrades an Stellen angeordnet werden, die durch den Permanentmagnetträger freigegeben werden. Dadurch ist es möglich, dass der eigentliche Motor die Getriebestufe zumindest teilweise aufnimmt und sich der Motor und das Getriebe in axialer Richtung überlappen.

Da das Hohlrad, insbesondere bei einer zweistufigen Ausbildung des Planetengetriebes, stufenförmig aufgebaut ist, ist es vorteilhaft, wenn der Permanentmagnetträger ebenfalls stufenförmig ausgebildet ist, so dass das Hohlrad besonders platzsparend angeordnet werden kann.

Wenn der Permanentmagnetträger im Querschnitt gabelförmig ausgebildet ist, kann es ausreichend sein, nur einen Permanentmagnetträger vorzusehen. An den "Zinken" des im Querschnitt gabelförmigen Permanentmagnetträgers können die Permanentmagnete angeordnet sein. Die Elektromagnet-Bauelemente können in die Zwischenräume zwischen den "Zinken" ragen.

Eine Lüftung für die Elektromagnet-Bauelemente kann realisiert werden, wenn an einem Motorwellenabschnitt, insbesondere einem dem Getriebe abgewandten Motorwellenabschnitt, radial abstehende Flügel vorgesehen sind.

Bei einer Ausgestaltung der Erfindung kann ein zweiter Permanentmagnetträger vorgesehen sein. Die Kontur dieses zweiten Permanentmagnetträgers kann an die Flügelform angepasst sein Insbesondere kann auch der zweite Permanentmagnetträger stufenförmig ausgebildet sein. Durch die stufenförmige Ausbildung ist es möglich, die Permanentmagnete von der Motorwellenachse gesehen radial außerhalb der Flügel anzuordnen. Es versteht sich, dass analog bei nur einem Permanentmagnetträger dessen eine Seite an die Kontur bzw. Form der Flügel angepasst sein kann.

Der oder die Permanentmagnetträger können einstückig mit der Motorwelle ausgebildet sein. Es ist jedoch auch denkbar, dass die Permanentmagnetträger separate Teile sind und beispielsweise drehfest auf die Motorwelle aufgesteckt sind. Insbesondere ein gabelförmiger Permanentmagnetträger kann auf beiden Seiten stufenförmig ausgebildet sein, so dass auf der einen Seite eine platzsparende Anordnung des Planetengetriebes möglich ist und auf der axial gegenüberliegenden Seite Flügel zum Kühlen der Elektromagnet-Bauelemente vorgesehen werden können.

Die Kühlung des Motors kann außerdem begünstigt werden, wenn der mindestens eine Permanentmagnetträger radial geschlitzt ist, wobei die Schlitze neben dem Permanentmagneten verlaufen.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel ist in der schematischen Zeichnung dargestellt und wird in der nachfolgenden Beschreibung erläutert. Es zeigen:
- **Fig. 1**: eine Explosionsdarstellung einer Motor-Getriebeanordnung;
- **Fig. 2**: eine Schnittdarstellung durch die Motor-Getriebeanordnung der Fig. 1.

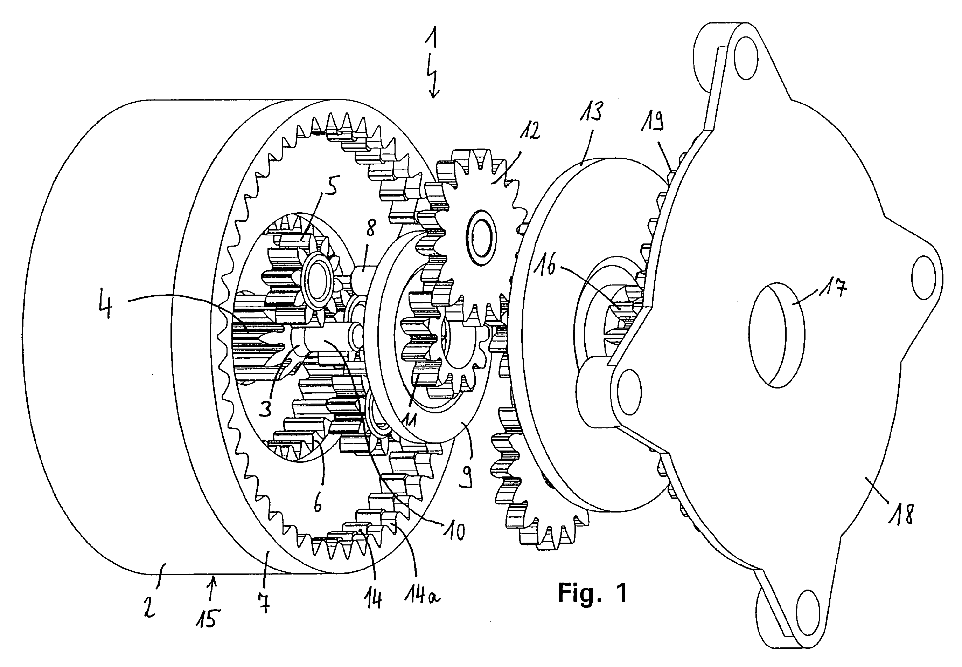

In der **Fig. 1** ist eine Explosionsdarstellung der Getriebestufe einer Motor-Getriebeanordnung 1 dargestellt. In dem Gehäuseabschnitt 2 ist der Motor angeordnet, der als Permanentmagnet-Axialfeld-Motor ausgebildet ist. Von dem Motor ist nur das dem Getriebe zugewandte Ende der Motorwelle 3 sichtbar. Auf der Motorwelle 3 ist eine erste Sonne 4 ausgebildet. Die Sonne 4 ist ein Zahnrad. Sie wirkt mit einem ersten Planeten 5 zusammen, der durch die Sonne 4 angetrieben wird und sich in dem Zahnkranz 6 des Hohlrads 7 abrollt. Der Planet 5 ist auf einem Zapfen 8 eines ersten Planetenträgers 9 gelagert. Der erste Planetenträger 9 ist auf den zylindrischen Motorwellenabschnitt 10 aufgesteckt bzw. von diesem durchgriffen. Auf der dem Motor abgewandten Seite des ersten Planetenträgers 9 ist eine zweite Sonne 11 ausgebildet, die mit dem zweiten Planeten 12 zusammenwirkt, der auf dem zweiten Planetenträger 13 gelagert ist. Der zweite Planet 12 rollt sich in einem zweiten Zahnkranz 14 des Hohlrads 7 ab. Dies bedeutet, dass das Hohlrad 7 zweistufig ausgebildet ist und zwei Zahnkränze 6, 14 aufweist, die in unterschiedlichen Ebenen angeordnet sind und unterschiedliche Durchmesser aufweisen. Das Hohlrad 7 schließt bündig an den Gehäuseabschnitt 2 an und stellt daher einen Teil des Gehäuses 15 dar. Auf der dem Motor abgewandten Seite weist der zweite Planetenträger 13 ein Abtriebselement 16 auf, das im Ausführungsbeispiel als Zahnrad ausgebildet ist. Das Abtriebselement 16 durchgreift in zusammengebautem Zustand eine Durchgangsöffnung 17 einer Gehäuseabdeckung 18. Die Gehäuseabdeckung 18 weist eine Verzahnung 19 auf, die in den Zahnkranz 14a des Hohlrads 7 eingreift. Im Ausführungsbeispiel sind für jede Getriebestufe zwei Planeten 5, 12 vorgesehen.

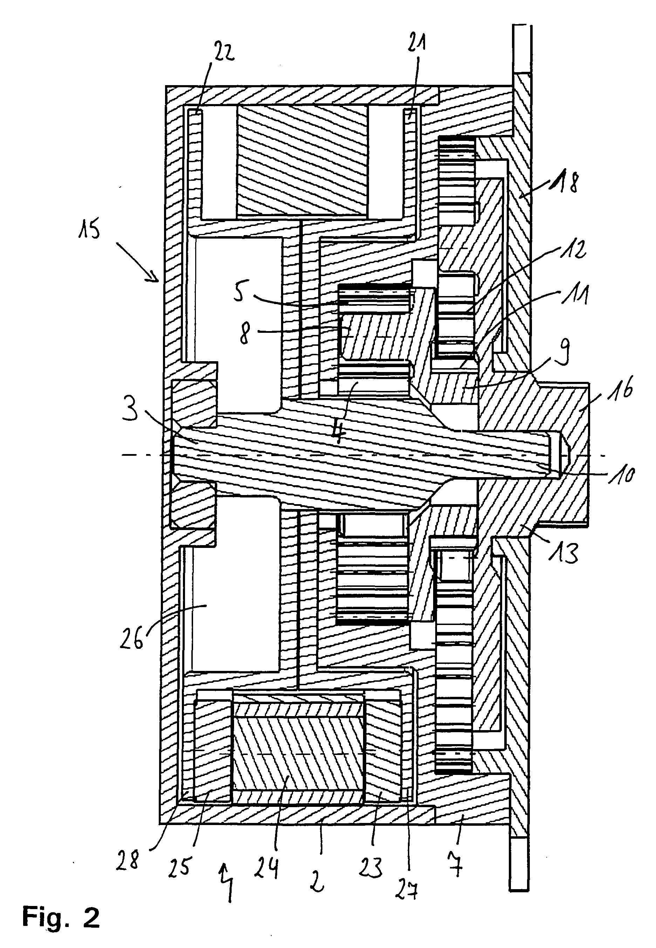

In der Fig. 2 ist ein Querschnitt durch die Motor-Getriebeanordnung 1 dargestellt. Die Motorwelle 3 ist einenends in dem Gehäuseabschnitt 2 gelagert und anderenends in dem zweiten Planetenträger 13. Die erste Sonne 4 ist an der Motorwelle 3 ausgebildet und kämmt mit dem ersten Planeten 5, das auf dem Zapfen 8 des ersten Planetenträgers 9 angeordnet ist. Außerdem rollt es sich in der ersten Stufe des Hohlrads 7 ab. Dadurch wird der erste Planetenträger 9 angetrieben, der die zweite Sonne 11 aufweist. Die zweite Sonne 11 kämmt mit dem zweiten Planeten 12, der auf dem zweiten Planetenträger 13 gelagert ist und sich in der zweiten Stufe des Hohlrades 7 abwälzt. Durch diese Maßnahme wird der zweite Planetenträger 13 in eine Drehbewegung versetzt, wodurch sich das Abtriebselement 16 dreht. Der Motorwellenabschnitt 10 ist im zweiten Planetenträger 13, insbesondere im Abtriebselement 16, gelagert. Das Abtriebselement 16 durchgreift die Gehäuseabdeckung 18, die in das Hohlrad 7 eingesteckt ist.

An der Motorwelle 3 sind ein erster und zweiter Permanentmagnetträger 21, 22 drehfest angeordnet. Der erste Permanentmagnetträger 21 ist stufenförmig aufgebaut und dadurch an die Form des Hohlrads 7 angepasst. An seinem freien Ende sind in regelmäßigen Winkelabständen Permanentmagnete 23 angeordnet. Sie liegen den Stirnflächen von Elektromagnet-Bauelementen 24 gegenüber. Die Elektromagnet-Bauelemente 24 sind ortsfest angeordnet, während sich der erste und zweite Permanentmagnetträger 21, 22 zusammen mit der Motorwelle 3 drehen. Der zweite Permanentmagnetträger 22 ist ebenfalls stufenförmig ausgebildet und weist ebenfalls in regelmäßigen Winkelabständen Permanentmagnete 25 auf, die so angeordnet sind, dass sie bei einer Drehbewegung der Motorwelle 3 eine Stirnseite der Elektromagnet-Bauelemente 24 überstreichen.

Die stufenförmige Ausbildung des zweiten Permanentmagnetträgers 22 erlaubt es, am hinteren Abschnitt der Motorwelle 3 Flügel 26 vorzusehen, die zur Lüftung bzw. zum Abführen von Wärme von den Elektromagnet-Bauelementen 24 dienen. Der erste und zweite Permanentmagnetträger 21, 22 können auch einstückig ausgebildet sein, wobei der resultierende Permanentmagnetträger gabelförmig ausgebildet sein kann und die Permanentmagnete 23, 25 an den "Zinken" 27, 28 einer solchen Gabel angeordnet sein können. Die Permanentmagnete 23, 25 weisen in Umfangsrichtung aufeinanderfolgend unterschiedliche Polarität auf. Auch die sich in Axialrichtung gegenüberliegenden Polflächen der Permanentmagnete 23, 25 haben unterschiedliche Polarität. In Umfangsrichtung aufeinanderfolgende Permanentmagnete 23, 25 sind jeweils durch Verbindung ihrer spulenabgewandten Stirnflächen, d.h. der den Elektromagnet-Bauelementen 24 abgewandten Stirnflächen, durch ein das Magnetfeld weitgehend einschließendes Joch aus hart- oder weichmagnetischem Material zu einem Hufeisenmagneten zusammengeschlossen. Die Elektromagnet-Bauelemente 24 weisen jeweils eine Spulenwicklung aus einem oder mehreren Leitern und einen Spulenkern auf. Die Enden der Leiter der Spulenwicklung sind an eine elektronische Steuereinrichtung angeschlossen, welche den der Steuereinrichtung von einer elektrischen Stromquelle zugeführten elektrischen Strom derart gesteuert in die Spulen einspeist, dass in den Elektromagnet-Bauelementen 24 ein magnetisches Drehfeld erzeugt wird, welches in Wechselwirkung mit den Permanentmagneten 23, 25 eine relative Drehung der Permanentmagnethalter 21, 22 und somit der Motorwelle 3 zum Gehäuse 15 zur Folge hat.

Bei einer Motor-Getriebeanordnung 1 sind ein bürstenloser Permanentmagnet-Axialfeld-Motor und ein Planetengetriebe in einem gemeinsamen Gehäuse 15 angeordnet, wobei ein Hohlrad 7 des Planetengetriebes einen Teil des Gehäuses 15 bildet, eine Motorwelle 3 und ein Abtriebselement 16 koaxial angeordnet sind und ein Permanentmagnetträger 21 an die Form des Hohlrads 7 derart angepasst ist, dass der Motor und das Getriebe sich teilweise überlappen. Dadurch wird eine axial kurze, kompakte Motor-Getriebeanordnung 1 realisiert.

## Patentansprüche

1. Motor-Getriebeanordnung (1) umfassend ein mit einer Motorwelle (3) eines Motors in Verbindung stehendes Getriebe, wobei der Motor eine Vielzahl von mit Abstand von der Motorwelle (3) in gleichmäßigen Winkelabständen angeordnete Elektromagnet-Bauelemente (24) und in gleichmäßigen Winkelabständen an mindestens einem mit der Motorwelle drehfest verbundenen Permanentmagnethalter (21, 22) angeordnete Permanentmagnete (23, 25) umfasst, **dadurch gekennzeichnet, dass** das Getriebe als Planetengetriebe ausgebildet ist.

2. Motor-Getriebeanordnung nach Anspruch 1, **dadurch gekennzeichnet, dass** der Motor ein Gehäuse (15) aufweist und das Planetengetriebe in demselben Gehäuse (15) angeordnet ist.

3. Motor-Getriebeanordnung nach einem der vorhergehenden Ansprüche, **dadurch gekennzeichnet, dass** eine erste Sonne (4), insbesondere ein erstes Sonnenrad, mit der Motorwelle (3) drehfest verbunden ist und mit einem sich in einem Hohlrad (7) abrollenden ersten Planetenrad (5) zusammenwirkt, wobei das Hohlrad (7) einen Teil des Gehäuses (15) darstellt.

4. Motor-Getriebeanordnung nach Anspruch 3, **dadurch gekennzeichnet, dass** das Hohlrad (7) einen ersten innen liegenden Zahnkranz (6) aufweist, der insbesondere innerhalb des Motorbauraumes angeordnet ist.

5. Motor-Getriebeanordnung nach einem der vorhergehenden Ansprüche, **dadurch gekennzeichnet, dass** ein erster Planetenträger (9) vorgesehen ist, der eine Lagerung für das erste Planetenrad (5) aufweist und auf die Motorwelle (3) oder einen Wellenfortsatz der ersten Sonne (4) aufsteckbar ist.

6. Motor-Getriebeanordnung nach einem der vorhergehenden Ansprüche, **dadurch gekennzeichnet, dass** das Planetengetriebe zweistufig ausgebildet ist.

7. Motor-Getriebeanordnung nach einem der vorhergehenden Ansprüche 5 oder 6, **dadurch gekennzeichnet, dass** der erste Planetenträger (9) eine zweite Sonne (11) aufweist, die über ein zweites an einem zweiten Planetenträger (13) gelagertes Planetenrad (12) den zweiten Planetenträger (13) antreibt.

8. Motor-Getriebeanordnung nach einem der vorhergehenden Ansprüche 3 bis 7, **dadurch gekennzeichnet, dass** das Hohlrad (7) stufenförmig aufgebaut ist.

9. Motor-Getriebeanordnung nach einem der vorhergehenden Ansprüche, **dadurch gekennzeichnet, dass** ein Abtriebselement (16) koaxial zu der Motorwelle (3) angeordnet ist.

10. Motor-Getriebeanordnung nach Anspruch 9, **dadurch gekennzeichnet, dass** das Abtriebselement (16) als Zahnrad ausgebildet ist.

11. Motor-Getriebeanordnung nach Anspruch 9, **dadurch gekennzeichnet, dass** das Abtriebselement (16) als Seilrolle ausgebildet ist.

12. Motor-Getriebeanordnung nach einem der vorhergehenden Ansprüche 3 bis 11, **dadurch gekennzeichnet, dass** eine Gehäuseabdeckung (18) vorgesehen ist, die eine Verzahnung (19) aufweist, die in eine korrespondierende Verzahnung (14a) des Hohlrads (7) eingreift.

13. Motor-Getriebeanordnung nach einem der vorhergehenden Ansprüche 5 bis 12, **dadurch gekennzeichnet, dass** die Motorwelle (3) einenends in einem Gehäuseteil (2) und anderenends in einem Planetenträger (13) gelagert ist.

14. Motor-Getriebeanordnung nach einem der vorhergehenden Ansprüche, **dadurch gekennzeichnet, dass** die Form des mindestens einen Permanentmagnetträgers (21) an das Hohlrad (7) angepasst ist.

15. Motor-Getriebeanordnung nach einem der vorhergehenden Ansprüche, **dadurch gekennzeichnet, dass** der mindestens eine Permanentmagnetträger (21) stufenförmig ausgebildet ist.

16. Motor-Getriebeanordnung nach einem der vorhergehenden Ansprüche, **dadurch gekennzeichnet, dass** der mindestens eine Permanentmagnetträger im Querschnitt gabelförmig ausgebildet ist.
